# EUROPEAN PATENT SPECIFICATION

(11) **EP 2 988 010 B1**
(45) Date of publication and mention of the grant of the patent: **04.09.2019**
(21) Application number: 14784633.1
(22) Date of filing: 30.01.2014
(51) Int. Cl.: F16C 33/38, F16C 19/16

(54) **ANGULAR BALL BEARING CAGE**
SCHRÄGKUGELLAGERKÄFIG
CAGE DE ROULEMENT À BILLES À CONTACT OBLIQUE

(30) Priority: 16.04.2013 JP 2013085803
(43) Date of publication of application: 24.02.2016
(73) Proprietor: NSK Ltd., Tokyo 141-8560 (JP)
(72) Inventor: TAKIO, Kazuhiro, Fujisawa-shi Kanagawa 251-8501 (JP); TANABE, Kouichi, Fujisawa-shi Kanagawa 251-8501 (JP)
(74) Representative: Grünecker Patent- und Rechtsanwälte PartG mbB
(86) International application number: PCT/JP2014/052047
(87) International publication number: WO 2014/171162

(56) References cited:
- JP-A- H 074 439
- JP-A- H09 236 127
- JP-A- 2004 211 862
- JP-A- 2004 316 852
- JP-A- 2008 267 400
- JP-A- 2009 014 205
- US-A- 5 906 441
- US-A1- 2006 233 476

## Description

### TECHNICAL FIELD

The invention relates to a cage for an angular ball bearing.

### BACKGROUND ART

As a rolling bearing for use in a pump or a compressor, recently, in order to increase life and maintenance time, there has been used a high-load-capacity type of angular ball bearing (for example, see the patent documents 1 and 2).

### RELATED ART REFERENCE

### PATENT DOCUMENT

Patent Document 1: JP-A-2008-309177
Patent Document 2: JP-A-2008-309178
Patent Document 3: JPH074439 NTN TOYO BEARING CO LTD) shows a radial ball bearing with ball pockets as described in the preamble of claim 1.

### SUMMARY OF THE INVENTION

### PROBLEMS TO BE SOLVED BY THE INVENTION

In the case that an angular ball bearing is used while it receives only an axial load in one direction, when the axial load is large, an rolling element load can be very small on the anti-load side of the angular ball bearing. Especially, in an angular ball bearing using a ball guide type cage, since the cage is revolved only by a drive force given from the ball, when the drive force from the ball is decreased due to the reduced rolling element load, the edge of the pocket of the cage is contacted with the ball, thereby impairing the revolution of the cage. In this case, there is a fear that revolution slip can occur between the inner ring and ball of the bearing to thereby wear the cage.

Further, when the ball is contacted with the edge of the pocket of the cage, the revolution of the ball on its own axis is impaired, thereby raising a fear that revolution slip between the inner ring and ball can be promoted. In order to prevent such revolution slip, the ball must be prevented against contact with the edge of the pocket of the cage. However, the above-cited patent document 1 and 2 give no description of this.

The invention is made in view of the above circumstances and thus has an object to provide a ball guide type cage for use in an angular ball bearing which prevents a ball against contact with the edge of the pocket of the cage, thereby enabling use under a smaller revolution drive force.

### MEANS FOR SOLVING THE PROBLEMS

The above object of the invention is attained by the following structure.
(1) A cage for an angular ball bearing including relatively rotatably opposed outer and inner rings and multiple balls rollably interposed between the rings, the cage holding the balls at specific intervals in the circumferential direction, including:
   a large-diameter side circular part and a small-diameter side circular part arranged side by side in the axial direction; and
   multiple pockets each configured to hold one of the multiple balls between the large-diameter side circular part and small-diameter side circular part, wherein:
      each of the pockets includes: a cylindrical hole opened in the outer peripheral surface of the cage and having an inside diameter set constant over a specific distance from the cage outer peripheral surface; and a conical hole opened in the inner peripheral surface of the cage and having an inside diameter reducing continuously from the diameter-direction inside end of the cylindrical hole toward the cage inner peripheral surface;
      where the inside diameter of the conical hole in the cage inner peripheral surface is expressed as A and the diameter of the ball is expressed as Dw, A/Dw≤0.94;
      where the specific distance of the cylindrical hole is expressed as C and the inside diameter of the cylindrical hole is expressed as B, C/B≤0.35; and
      the minimum value D of the difference between PCD of the ball and the outside diameter of the cage and the diameter Dw of the ball satisfy the relational expression, D/Dw≥0.04.

### EFFECTS OF THE INVENTION

According to the cage for an angular ball bearing of the invention, the balls can be prevented against contact with the edges of the pockets of the cage, thereby enabling use under a smaller revolution drive force.

### BRIEF DESCRIPTION OF THE DRAWINGS

Fig. 1 is a section view of an angular ball bearing in which a cage according to an embodiment of the invention is used.
Fig. 2 is a section view of the cage of Fig. 1.
Fig. 3 is a view of the pocket of the cage, explaining the portion thereof where edge contact occurs.
Fig. 4 is a view of the pocket of the cage, explaining the shape dimensions thereof.
Fig. 5 is a graph to show A/Dw in an embodiment 1 and comparison example 1.
Fig. 6 is a graph to show C/B in the embodiment 1 and comparison example 1.
Fig. 7 is a graph to show D/Dw in the embodiment 1 and comparison example 1.
Fig. 8 is a graph to show the results of a revolution slip test.

### MODES FOR CARRYING OUT THE INVENTION

Description is given specifically of the respective embodiments of a copper-made cage for an angular ball bearing according to the invention with reference to the drawings.

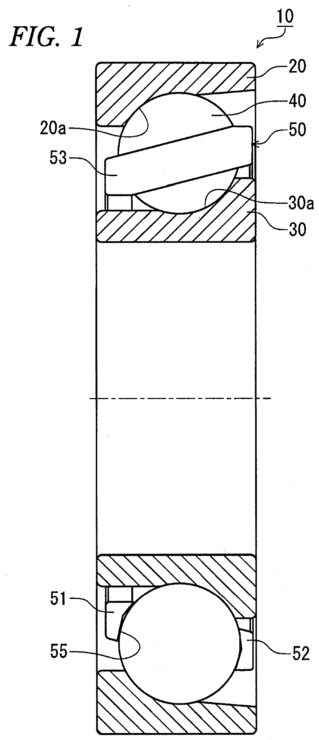

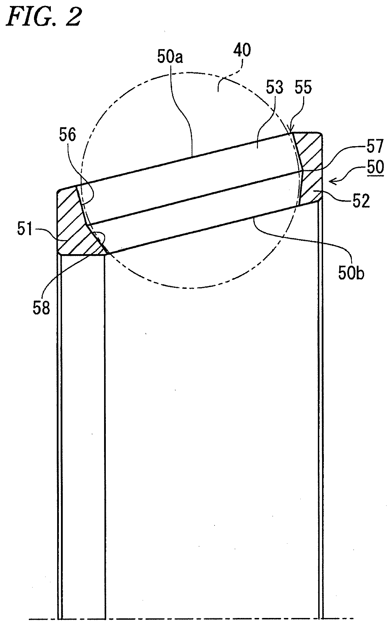

Fig. 1 is an explanatory view of an angular ball bearing 10 in which a cage 50 according to an embodiment of the invention is used, and Fig. 2 is an explanatory view of the details of the cage 50. The angular ball bearing 10 includes an outer ring 20 having an outer ring raceway 20a in its inside diameter surface, an inner ring 30 having an inner ring raceway 30a in its outside diameter surface, multiple balls 40 rollably interposed between the outer ring raceway 20a and inner ring raceway 30a, and a cage 50 having multiple pockets 55 each for storing one of the balls 40.

The cage 50 is a machined cage made of copper alloy or the like and includes a small-diameter side circular part 51, a large-diameter side circular part 52 and multiple pillar parts 53 for connecting together the small- and large-diameter side circular parts 51 and 52. The small- and large-diameter side circular parts 51, 52 and two pillar parts 53 adjoining together in the peripheral direction constitute the pocket 55. The cage 50 is a ball guide type cage and can be revolved when it is driven by the balls 40 rotatable due to rotation of a shaft (not shown) and inner ring 30.

Each pocket 55 includes a cylindrical hole 56 opened substantially orthogonal to a cage outer peripheral surface 50a (the outer peripheral surface of the pillar part 53) continuing from the outer peripheral surface of the small-diameter side circular part 51, and a truncated conical hole 58 opened in a cage inner peripheral surface 50b (the inner peripheral surface of the pillar part 53) continuing from the inner peripheral surface of the large-diameter side circular part 52. The cylindrical hole 56 is formed such that its inside diameter is constant from the cage outer peripheral surface 50a to the diameter-direction inside end 57. The conical hole 58 continues from the diameter-direction inside end 57, while its inside diameter reduces from the diameter-direction inside end 57 to the cage inner peripheral surface 50b.

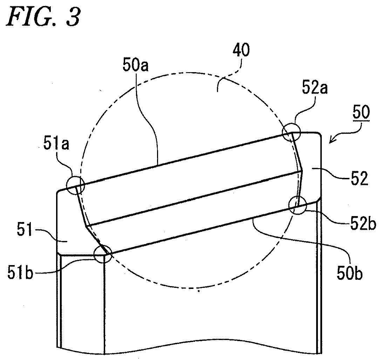

Here, the ball 40 is contacted with the edge of the pocket 55 of the cage 50 in the following two cases. One case is the edge contact on the outside-diameter side of the pocket 55 (which may also be hereinafter called "outside- diameter side edge contact"), where, in the outside-diameter side edges of the small-diameter side circular part 51 and large-diameter side circular part 52, that is, in areas 51a and 52a shown in Fig. 3, the contact areas of the ball 40 and cage 50 are superimposed on each other. The other is edge contact on the inside-diameter side of the pocket 55 (which may also be hereinafter called "inside-diameter side edge contact"), where, in the inside-diameter side edges of the small- and large-diameter side circular parts 51 and 52, that is, in areas 51b and 52b shown in Fig. 3, the contact areas of the ball 40 and cage 50 are superimposed on each other. In a ball guide type cage like the cage 50, when such outside- diameter side edge contact or inside-diameter side edge contact occurs, the revolution of the cage 50 is impaired by the ball 40, thereby raising a fear that revolution slip can occur between the inner ring 30 and ball 40. Thus, in order to prevent such revolution slip, such outside-diameter side edge contact or inside-diameter side edge contact must be prevented.

In order to prevent the inside-diameter side edge contact, it is necessary to prevent the contact area between the ball 40 and cage 50 from getting too close to the inside-diameter side edges of the small-diameter side circular part 51 and large-diameter side circular part 52, that is, the areas 51b and 52b. Also, in order to prevent the outside-diameter side edge contact, even when the cage 50 moves most in the diameter direction, the outside-diameter side edges of the small-diameter side circular part 51 and large-diameter side circular part 52, that is, the areas 51a and 52a must be prevented from being situated more inside in the diameter direction than PCD (pitch circle diameter) of the center of the ball 40. Thus, in order to prevent the above-mentioned outside-diameter side edge contact and inside-diameter side edge contact, the inventors have conducted the following test 1 to specify the dimensions and the like of the respective parts of the cage 50.

### (Test 1)

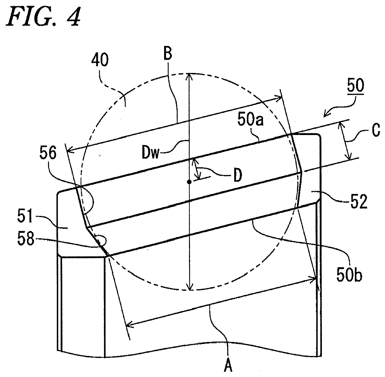

Here, cages applicable to an angular ball bearing of a call number: 7316B (mass: 3.79kg, outside diameter: 170 mm, width B: 39 mm, and inside diameter d: 80 mm) were produced experimentally, while the dimensions of the respective parts thereof were different. Two kinds of cages according to an embodiment 1 and comparison example 1 were experimentally produced in such a manner that the diameters B and lengths C of the cylindrical holes 56, the opening diameters A of the conical holes 58, and the differences minimum values D between the cage outside diameters (the outside diameters of the cage outer peripheral surfaces 50a) and PCDs of the balls 40 were different from each other (see Fig. 4). Table 1 shows the values of A/Dw, C/B and D/Dw of the respective cages of the example 1 and comparison example 1.

**[Table 1]**

| | A/Dw | C/B | D/Dw | Inside diameter side edge contact | Outside diameter side edge contact |
|---|---|---|---|---|---|
| Embodiment 1 | 0.905 | 0.225 | 0.10 | Not occurred | Not occurred |
| | | | | | |
| | | | | | |
| | | | | | |
| Comparison example 1 | 0.975 | 0.400 | 0.05 | Occurred | Occurred |

Angular ball bearings (call number: 7316B) incorporating therein the cages of the embodiment 1 and comparison example 1 were defined as DB combinations and, in order that they provide P/Cr=0.10, a purely axial load was applied to them. Here, the other specifications of the respective angular ball bearings than the cages were the same. And, applying such fixed position preload as allows a preload load to be 5% or less of a rated load, rotation tests were conducted while changing the rotation speeds (PCD x number of rotations) up to 400000 ∼ 600000. By confirming the contact traces of the cages 50, it was checked whether the outside-diameter side edge contact and inside-diameter side edge had occurred or not. The check results are shown in Table 1.

As shown in Table 1, in the angular ball bearing using the cage of the embodiment 1, neither outside-diameter side edge contact nor inside-diameter side edge occurred. In the angular ball bearing using the cage of the comparison example 1, edge contact occurred on both inside- and outside-diameter sides.

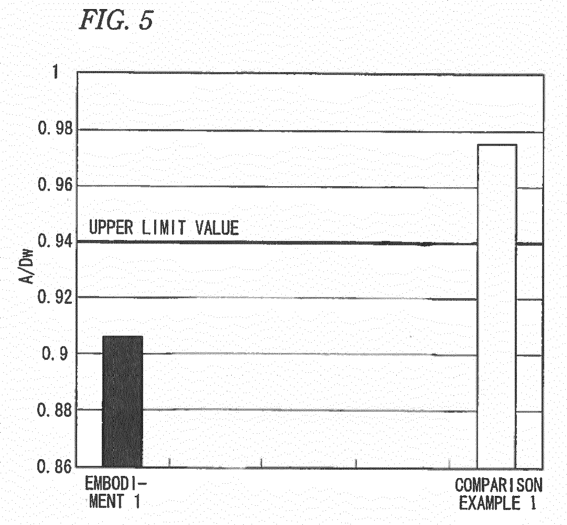

Fig. 5 shows the values of the conical hole opening diameters A/ball diameters Dw of the cages of the embodiment 1 and comparison example 1. As can be seen clearly from Fig. 5 and Table 1, A/Dw is an index relating to the inside-diameter side edge contact. In the angular ball bearings using the cages of the embodiment 1, A/Dw is 0.94 or less and no inside-diameter side edge contact occurred.

Meanwhile, like the comparison example 1, when the conical hole opening diameter A increases to approach the ball diameter Dw, edge contact is easy to occur in the areas 51b and 52b of the conical hole 58. Also, when the conical hole opening diameter A increases to approach the ball diameter Dw, the angle decreases, whereby the ball is restricted by the cage due to wedge effect. Therefore, the conical hole opening diameter A and ball diameter Dw must satisfy A/Dw≤0.94. The conical hole opening diameter A may preferably be as small as possible.

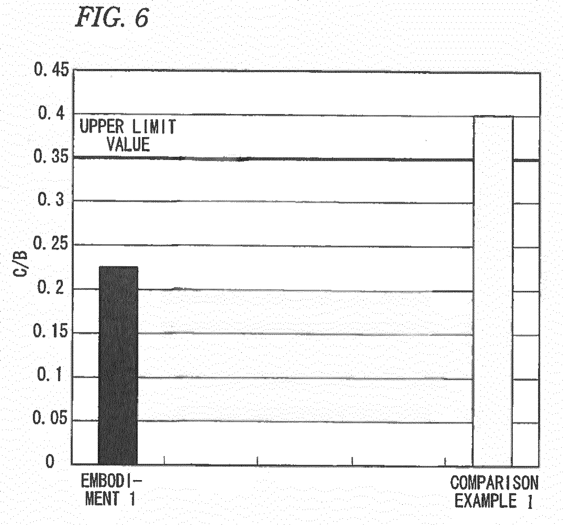

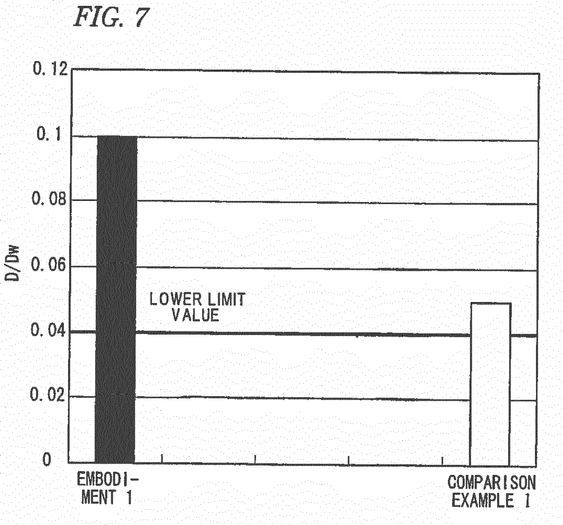

Figs. 6 and 7 respectively show the values of the cylindrical hole lengths C / cylindrical hole diameters B, and the values of the differences D (between cages outside diameters and balls 40) / ball diameters Dw in the example 1 and comparison example 1. As can be seen clearly from Figs. 6, 7 and Table 1, C/B and D/Dw are both indexes relating to the outside-diameter side edge contact. In the angular ball bearings using the cages of the embodiment 1, since C/B and D/Dw satisfy reference values (to be discussed later), no outside-diameter side edge contact occurred.

Here, although the value of the cylindrical hole diameter B itself does not relate directly to the edge contact, when the cylindrical hole diameter B reduces to approach the ball diameter Dw, the ball 40 is restricted excessively by the cage 50. Meanwhile, when the cylindrical hole diameter B is too large, the movement of the ball 40 is large in both diameter and axial directions, thereby raising a fear that, in highspeed rotation, acoustic and heat generating problems can occur. Thus, the cylindrical hole diameter B and ball diameter Dw may preferably satisfy 1.010≤B/Dw≤1.060.

The results of the test 1 show that, according to the cage 50 satisfying A/Dw≤0.94, C/B≤0.35, and D/Dw≥0.04, in the pocket 55 of the cage 50, edge contact can be prevented on the outside- and inside-diameter sides.

### (Test 2)

Next, an angular ball bearing using the cage 1 of the embodiment 1 used in the test 1 and an angular ball bearing (call number: 7316B, other specifications are the same) using the cage of the comparison example 1 were prepared and, while changing the number of revolutions, a revolution slip test was conducted. Assuming that the angular ball bearings respectively using the cages of the example 1 and comparison example 1 are used as a DB combination, axial clearance and fitting-condition/ temperature-condition were adjusted so that a preload provides approximately 300kgf. Also, similarly to a conventionally used angular ball bearing for a pump, an axial load of 1800kgf was applied.

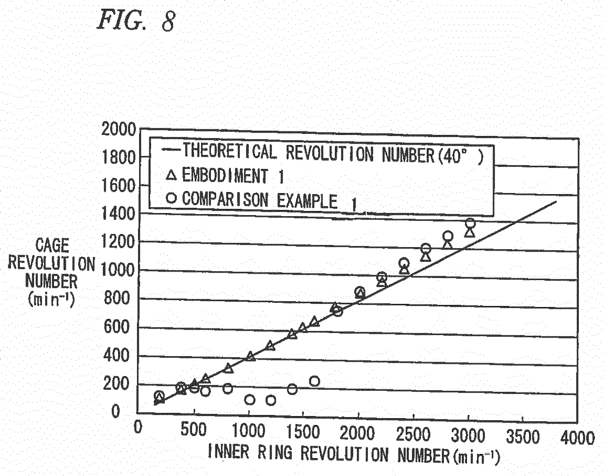

Fig. 8 shows the test results. As shown in Fig. 8, in the angular ball bearing using the cage of the embodiment 1, the cage revolution number met the theoretical revolution number and thus no revolution slip occurred. Meanwhile, in the angular ball bearing using the cage of the comparison example 1, in the small revolution number area, the cage revolution number was greatly smaller than the theoretical revolution number of a contact angle 40°, showing revolution slip occurrence. Here, even in the angular ball bearing using the cage of the comparison example 1, in the large revolution number area, no revolution slip occurred. The reason for this may be that, in such area, a centrifugal force was given to the ball to thereby increase a rolling element load and thus increase a revolution drive force from the ball. Also, in both the embodiment 1 and comparison example 1, in the area where the revolution number is 2000 min⁻¹ or larger, the actual revolution number of the cage is larger than the theoretical one. This may be because the contact angle change has been increased by the centrifugal force.

As described above, according to the angular ball bearing cage 50 of the embodiment, in the pocket 55 of the cage 50, edge contact on the outside- and inside-diameter sides can be prevented, thereby enabling prevention of revolution sip between the inner ring 30 and ball 40. Also, use under the smaller revolution drive force is possible.

Although the embodiment of the invention has been described heretofore, the invention is not limited to the embodiment but can be enforced while changing it variously without departing from the scope of the patent claims. The present application is based on the Japanese Patent Application (JPA2013-085803) filed on April 16, 2013.

### INDUSTRIAL APPLICABILITY

The invention can be suitably applied to, especially, an angular ball bearing for use in a pump and a compressor.

### DESCRIPTION OF REFERENCE NUMERALS AND SIGNS

10: angular ball bearing
20: outer ring
30: inner ring
40: ball
50: cage
55: pocket
56: cylindrical hole
58: conical hole

## Claims

1. A cage (50) for an angular ball bearing (10) including relatively rotatably opposed outer and inner rings (20, 30) and multiple balls (40) rollably interposed between the rings, the cage holding the balls at specific intervals in the circumferential direction, comprising:
a large-diameter side circular part (52) and a small-diameter side circular part (51) arranged side by side in the axial direction; and
multiple pockets (55) each configured to hold one of the multiple balls between the large-diameter side circular part and small-diameter side circular part, **characterised in that**:
each of the pockets includes: a cylindrical hole (56) opened in the radial outer peripheral surface (50a) of the cage and having an inside diameter set constant over a specific distance from the cage radial outer peripheral surface; and a conical hole (58) opened in the radial inner peripheral surface (50b) of the cage and having an inside diameter reducing continuously from the diameter-direction inside end (57) of the cylindrical hole toward the cage radial inner peripheral surface;
where the inside diameter of the conical hole in the cage radial inner peripheral surface is expressed as A and the diameter of the ball is expressed as Dw, A/Dw≤0.94;
where the specific distance of the cylindrical hole is expressed as C and the inside diameter of the cylindrical hole is expressed as B, C/B≤0.35; and
the minimum value D of the difference between PCD of the ball and the outside diameter of the cage radial outer peripheral surface and the diameter Dw of the ball satisfy the relational expression, D/Dw≥0.04.

## Patentansprüche

1. Käfig (50) für ein Schrägkugellager (10) mit gegenüberliegenden Außen- und Innenringen (20, 30), die relativ drehbar sind, und mehreren Kugeln (40), die rollbar zwischen den Ringen angeordnet sind, wobei der Käfig die Kugeln in bestimmten Intervallen in Umfangsrichtung hält, umfassend:
ein Rundteil an der Seite mit großem Durchmesser (52) und ein Rundteil an der Seite mit kleinem Durchmesser (51), die in der axialen Richtung nebeneinander angeordnet sind; und
mehrere Taschen (55), die jeweils konfiguriert sind, um eine der mehreren Kugeln zwischen dem Rundteil an der Seite mit großem Durchmesser und dem Rundteil an der Seite mit kleinem Durchmesser zu halten, **dadurch gekennzeichnet, dass:**
jede der Taschen aufweist: ein zylindrisches Loch (56), das in der radialen äußeren Umfangsfläche (50a) des Käfigs geöffnet ist und einen Innendurchmesser hat, der über einen bestimmten Abstand von der radialen äußeren Umfangsfläche des Käfigs konstant eingestellt ist; und ein konisches Loch (58), das in der radialen inneren Umfangsfläche (50b) des Käfigs geöffnet ist und einen Innendurchmesser hat, der sich kontinuierlich vom inneren Ende in Durchmesserrichtung (57) des zylindrischen Lochs zur radialen inneren Umfangsfläche des Käfigs verringert;
wobei der Innendurchmesser des konischen Lochs in der radialen inneren Umfangsfläche des Käfigs als A ausgedrückt wird und der Durchmesser der Kugel als Dw, A/Dw≤0,94 ausgedrückt wird;
wobei der bestimmte Abstand des zylindrischen Lochs als C ausgedrückt wird und der Innendurchmesser des zylindrischen Lochs als B, C/B≤0,35 ausgedrückt wird; und
der Minimalwert D der Differenz zwischen PCD der Kugel und dem Außendurchmesser der radialen äußeren Umfangsfläche des Käfigs und dem Durchmesser Dw der Kugel den relationalen Ausdruck D/Dw≤0,04 erfüllt.

## Revendications

1. Cage (50) de roulement à billes à contact oblique (10) comprenant des bagues extérieure et intérieure (20, 30) opposées l'une à l'autre en rotation et des billes multiples (40) interposées de manière roulante entre les bagues, la cage maintenant les billes à des intervalles spécifiques dans la direction périphérique, comprenant:
une partie circulaire côté grand diamètre (52) et une partie circulaire côté petit diamètre (51) disposées côte à côte dans la direction axiale; et
plusieurs poches (55) configurées chacune pour contenir l'une des billes multiples entre la partie circulaire latérale côté grand diamètre et la partie circulaire latérale côté petit diamètre,
**caractérisé en ce que**:
chacune des poches comprend: un trou cylindrique (56) ouvert dans la surface périphérique extérieure radiale (50a) de la cage et ayant un diamètre intérieur réglé constant sur une distance spécifique de la surface périphérique extérieure radiale de la cage; et un trou conique (58) ouvert dans la surface périphérique intérieure radiale (50b) de la cage et ayant un diamètre intérieur réduisant continuellement depuis l'extrémité intérieure dans la direction du diamètre (57) du trou cylindrique vers la surface périphérique intérieure radiale de la cage;
où le diamètre intérieur du trou conique dans la surface périphérique intérieure radiale de la cage est exprimé comme A et le diamètre de la bille est exprimé comme Dw, A/Dw ≤ 0,94;
où la distance spécifique du trou cylindrique est exprimée en C et le diamètre intérieur du trou cylindrique est exprimé en B, C/B ≤ 0,35 ; et
la valeur minimale D de la différence entre le PCD de la bille et le diamètre extérieur de la surface périphérique extérieure radiale de la cage et le diamètre Dw de la bille satisfait l'expression relationnelle, D/Dw ≥ 0,04.
